# EUROPEAN PATENT APPLICATION

(11) **EP 4 340 067 A1**
(43) Date of publication of application: **20.03.2024**
(21) Application number: 21941554.4
(22) Date of filing: 10.08.2021
(51) Int. Cl.: H01M 4/48, H01M 4/62

(54) **UNIFORMLY MODIFIED SILICON MONOXIDE NEGATIVE ELECTRODE MATERIAL, AND PREPARATION METHOD THEREFOR AND USE THEREOF**

(30) Priority: 13.05.2021 CN 202110522885
(71) Applicant: Tianmulake Excellent Anode Materials Co., Ltd., Liyang, Jiangsu 213330 (CN)
(72) Inventor: LUO, Fei, Liyang, Jiangsu 213330 (CN)
(74) Representative: Glück Kritzenberger Patentanwälte PartGmbB
(86) International application number: PCT/CN2021/111680
(87) International publication number: WO 2022/236985

(57) **Abstract**

The present invention relates to a uniformly modified silicon monoxide negative electrode material, and a preparation method therefor and the use thereof. The silicon monoxide negative electrode material comprises silicon monoxide and carbon atoms, wherein the carbon atoms are uniformly distributed in silicon monoxide at an atomic level; a carbon atom is bonded to a silicon atom to form an amorphous Si-C bond, and an X-ray diffraction (XRD) energy spectrum has no SiC crystallization peak; in solid-state nuclear magnetic resonance (NMR) detection of the uniformly modified silicon monoxide negative electrode material, the ²⁹Si NMR spectrum shows that there is a resonance peak of Si-C between -10 ppm and -20 ppm; the average particle size D50 of silicon monoxide negative electrode material particles is 1 nm-100 µm, and the specific surface area is 0.5 m²/g-40 m²/g; the mass of the carbon atoms accounts for 0.1%-40% of the mass of silicon monoxide. According to the present invention, by using a gaseous method, carbon atoms are uniformly embedded into silicon monoxide at an atomic level, the material has small volume expansion in a lithium dis-embedding process, the conductivity coefficient for lithium ions is high, and the cycle performance and rate performance of the material are improved.

## Description

This application claims priority for Chinese patent application No. 202110522885.1, entitled "UNIFORMLY MODIFIED SILICON MONOXIDE NEGATIVE ELECTRODE MATERIAL, PREPARATION METHOD THEREFOR AND APPLICATION THEREOF", filed with China National Intellectual Property Administration on May 13, 2021.

### BACKGROUND OF THE INVENTION

### 1. Technical Field

The present invention relates to the technical field of materials, in particular to a uniformly modified silicon monoxide negative electrode material, a preparation method therefor and an application thereof.

### 2. Description of Related Art

An energy density of a lithium ion battery is positively correlated with a gram capacity of positive and negative electrode materials. At present, the gram capacity of high-end graphite used in negative electrode materials has reached 360-365 mAh/g, which is close to a theoretical gram capacity of 372 mAh/g. Therefore, it is necessary to develop negative electrode materials with even higher gram capacity to improve the energy density of battery cells. A silicon-based negative electrode achieves lithium storage and removal through alloying and dealloying with lithium ions, resulting in a high gram capacity. However, it also undergoes significant volume expansion. Material design and battery system optimization are main ways to solve the commercialization of silicon-based anode materials. In terms of material design, some achievements have been made in the modification of silicon monoxide. The silicon monoxide has poor conductivity, and there are also some problems such as volume expansion and constant SEI film growth during a cycling process. A carbon coating can protect the silicon monoxide by acting as a buffer layer for particle expansion, and can also increase the conductivity of particles, promote the transmission of lithium ions and reduce the charge transfer impedance of electrodes.

To further enhance the rapid charging performance of the battery, it is crucial not only to enhance the surface conductivity of silicon monoxide particles but also to improve the conductivity of the interior of the particles. However, the conductivity of an interior of the silicon monoxide particles cannot be improved by surface modification, but the improvement of which is necessary in the face of the actual demand for rapid charging in future applications.

### BRIEF SUMMARY OF THE INVENTION

The embodiments of the present invention provide a uniformly modified silicon monoxide negative electrode material, a preparation method therefor and an application thereof. A carbon substance-containing solution is introduced into a deposition vapor for preparing silicon monoxide, so that it can be rapidly vaporized at high temperature; and then the mixed vapor is cooled and deposited, so that carbon atoms are uniformly embedded in silicon monoxide at an atomic level. Compared with a traditional silicon monoxide negative electrode material, this material has smaller volume expansion in a lithium dis-embedding process, higher conductivity coefficient to the lithium ions, and better cycle performance and rate performance.

In a first aspect, an embodiment of the present invention provides a uniformly modified silicon monoxide negative electrode material, including silicon monoxide and carbon atoms, wherein the carbon atoms are uniformly distributed in the silicon monoxide at an atomic level; each of the carbon atoms is bonded to a silicon atom to form an amorphous Si-C bond, and an X-ray diffraction (XRD) energy spectrum has no SiC crystallization peak; in solid-state nuclear magnetic resonance (NMR) detection of the uniformly modified silicon monoxide negative electrode material, a ²⁹Si NMR spectrum shows that there is a resonance peak of Si-C between -10 ppm and -20 ppm;
an average particle size D₅₀ of silicon monoxide negative electrode material particles is 1 nm-100 µm, and a specific surface area is 0.5 m²/g-40 m²/g; and a mass of the carbon atoms accounts for 0.1%-40% of a mass of the silicon monoxide.

Preferably, a carbon coating layer is further provided outside the silicon monoxide negative electrode material, and a mass of the carbon coating layer accounts for 0-20% of the mass of the silicon monoxide.

Further preferably, the mass of the carbon atoms accounts for 0.5%-10% of the mass of the silicon monoxide, and the mass of the carbon coating layer accounts for 0-10% of the mass of the silicon monoxide.

In a second aspect, an embodiment of the present invention provides a preparation method for the silicon monoxide negative electrode material described in the first aspect, including:
uniformly mixing silicon and silicon dioxide powder in a prescribed amount, and placing the mixture into a furnace body to obtain a vapor containing silicon and oxygen elements by heating under reduced pressure, wherein a heating temperature is 1000°C-1800°C;
introducing a carbon substance-containing solution into the furnace body to vaporize the carbon substance-containing solution, so as to obtain a mixed vapor; and cooling and depositing the mixed vapor on a water-cooled substrate, and pulverizing the deposited material to obtain a silicon monoxide material with carbon atoms uniformly dispersed at an atomic level, which is a silicon monoxide negative electrode material.

Preferably, the carbon substance-containing solution includes one or more of an organic solution, an organic solution in which a solute is dissolved, and a water-based carbon-containing solution.

More preferably, the carbon substance-containing solution includes one or more of benzene, ethanol, diethyl ether, acetone, acetonitrile, pyridine, tetrahydrofuran, a tetrahydrofuran solution in which polyvinylidene fluoride is dissolved, a dimethylformamide solution in which polyacrylonitrile is dissolved, a dimethyl sulfoxide solution in which polyurethane is dissolved, a graphene water-based dispersion, a carbon black water-based dispersion or asphalt emulsion.

Preferably, the preparation method further includes: performing a carbon coating on the pulverized material, and obtaining the silicon monoxide negative electrode material after grading.

Further preferably, the carbon coating includes at least one of gas-phase coating, liquid-phase coating or solid-phase coating.

In a third aspect, an embodiment of the present invention provides a negative plate including the silicon monoxide negative electrode material described in the first aspect.

In a fourth aspect, an embodiment of the present invention provides a lithium battery including the negative plate described in the third aspect.

According to the present invention, a carbon substance-containing solution is introduced into a deposition vapor for preparing silicon monoxide, so that it can be rapidly vaporized at high temperature; and then the mixed vapor is cooled and deposited to obtain silicon monoxide in which carbon atoms are uniformly embedded at an atomic level. In the material, dispersed carbon atoms are bonded to silicon atoms to form amorphous Si-C bonds, and XRD has no SiC crystallization peak; and in solid-state NMR detection of the uniformly modified silicon monoxide negative electrode material, the ²⁹Si NMR spectrum shows that there is a resonance peak of Si-C between -10 ppm and -20 ppm. Such silicon monoxide with carbon atoms uniformly embedded therein at an atomic level has small volume expansion in a lithium dis-embedding process, and high conductivity coefficient to the lithium ions, and thus the cycle performance and rate performance of the material are improved.

### BRIEF DESCRIPTION OF THE SEVERAL VIEWS OF THE DRAWINGS

The technical solutions of the embodiments of the present invention will be described in further detail with reference to the drawings and embodiments.
Fig. 1 is a diagram showing a preparation process of a uniformly modified silicon monoxide negative electrode material according to an embodiment of the present invention.
Fig. 2 is a ²⁹Si NMR pattern of a uniformly modified silicon monoxide negative electrode material provided in Embodiment 1 of the present invention.
Fig. 3 is an XRD pattern of a uniformly modified silicon monoxide negative electrode material provided in Embodiment 1 of the present invention.

### DETAILED DESCRIPTION OF THE INVENTION

The present invention will be further explained below by referring to drawings and specific embodiments, but it should be understood that these embodiments are only for more detailed explanation, and should not be construed as limiting the present invention in any way, that is, not intended to limit the scope of protection of the present invention.

A silicon monoxide negative electrode material in the present invention includes silicon monoxide and carbon atoms, wherein the carbon atoms are uniformly distributed in the silicon monoxide at an atomic level; each of the carbon atoms is bonded to a silicon atom to form an amorphous Si-C bond, and an X-ray diffraction (XRD) energy spectrum has no SiC crystallization peak; in solid-state nuclear magnetic resonance (NMR) detection of the uniformly modified silicon monoxide negative electrode material, a ²⁹Si NMR spectrum shows that there is a resonance peak of Si-C between -10 ppm and -20 ppm;
an average particle size D₅₀ of silicon monoxide negative electrode material particles is 1 nm-100 µm, and a specific surface area is 0.5 m²/g-40 m²/g; and a mass of the carbon atoms accounts for 0.1%-40% of the mass of the silicon monoxide. Preferably, the mass of the carbon atoms accounts for 0.5%-10% of the mass of the silicon monoxide.

A carbon coating layer is further provided outside the silicon monoxide negative electrode material, and a mass of the carbon coating layer accounts for 0-20% of the mass of the silicon monoxide, and preferably, the mass of the carbon coating layer accounts for 0-10% of the mass of the silicon monoxide.

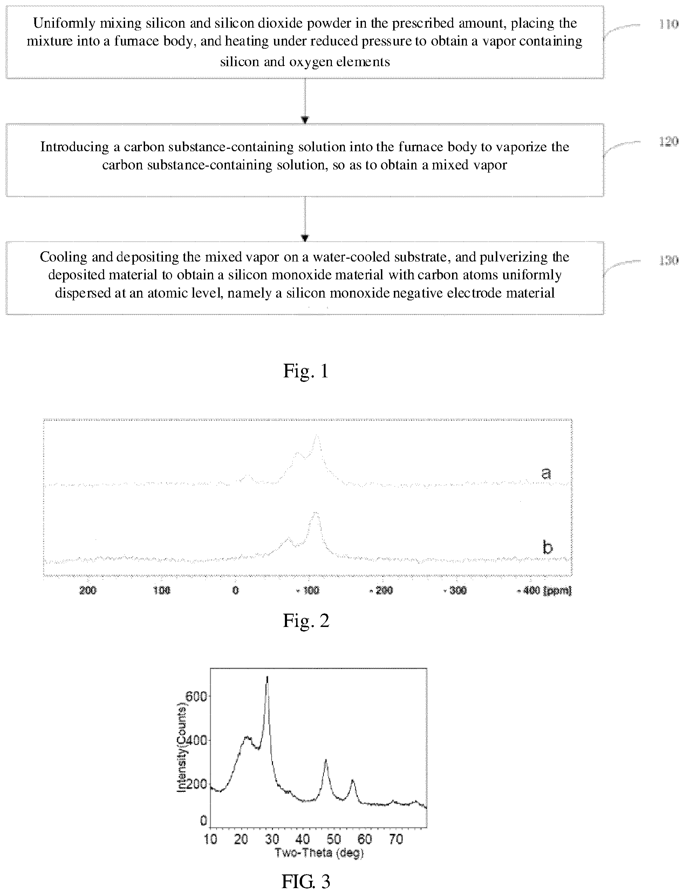

The uniformly modified silicon monoxide negative electrode material in the present invention can be obtained by the following preparation method. As shown in Fig. 1, the preparation method mainly includes the following steps.

Step 110, silicon and silicon dioxide powder are uniformly mixed in a prescribed amount, the mixture is placed into a furnace body, and a vapor containing silicon and oxygen elements is obtained by heating under reduced pressure.

A heating temperature is 1000°C-1800°C.

Step 120, a carbon substance-containing solution is introduced into the furnace body to vaporize the carbon substance-containing solution, so as to obtain a mixed vapor.

Specifically, the carbon substance-containing solution includes one or more of an organic solution, an organic solution in which a solute is dissolved, and a water-based carbon-containing solution, and specifically, the carbon substance-containing solution includes, but is not limited to, one or more of benzene, ethanol, diethyl ether, acetone, acetonitrile, pyridine, tetrahydrofuran, a tetrahydrofuran solution in which polyvinylidene fluoride is dissolved, a dimethylformamide solution in which polyacrylonitrile is dissolved, a dimethyl sulfoxide solution in which polyurethane is dissolved, a graphene water-based dispersion, a carbon black water-based dispersion or asphalt emulsion.

Step 130, the mixed vapor is cooled and deposited on a water-cooled substrate, and the deposited material is pulverized to obtain a silicon monoxide material with carbon atoms uniformly dispersed at an atomic level, which is a silicon monoxide negative electrode material.

Further, to prepare a silicon monoxide negative electrode material with a carbon coating layer on the outside, a carbon coating may be performed on the pulverized material, and then the silicon monoxide negative electrode material is obtained after grading. Specifically, the carbon coating includes at least one of gas-phase coating, liquid-phase coating or solid-phase coating. The above three methods are commonly used in the preparation of battery materials, and will not be explained in detail here.

According to the present invention, a carbon substance-containing solution is introduced into a deposition vapor for preparing silicon monoxide, so that it can be rapidly vaporized at high temperature; and then the mixed vapor is cooled and deposited to obtain silicon monoxide in which carbon atoms are uniformly embedded at an atomic level. In the material, dispersed carbon atoms are bonded to silicon atoms to form amorphous Si-C bonds, and XRD has no SiC crystallization peak; and in solid-state NMR detection of the uniformly modified silicon monoxide negative electrode material, the ²⁹Si NMR spectrum shows that there is a resonance peak of Si-C between -10 ppm and -20 ppm. Such silicon monoxide with carbon atoms uniformly embedded therein at an atomic level has small volume expansion in a lithium dis-embedding process, and high conductivity coefficient to the lithium ions, and thus the cycle performance and rate performance of the material are improved.

The silicon monoxide negative electrode material provided by the present invention can be used for preparing negative plates applied in lithium batteries.

In order to better understand the technical solution provided by the present invention, the specific process of preparing the silicon monoxide negative electrode material by the method provided in the above embodiment of the present invention, and the method and characteristics of its application in a lithium secondary battery are described below with several specific examples.

### Embodiment 1

1 kg of silicon powder and 1 kg of silicon dioxide powder are placed in a vacuum reaction furnace, vacuumizing is performed until the pressure is lower than 0.1 Torr, and then the temperature is raised to 1400°C, so that the materials are vaporized; at the same time, a benzene solution is slowly introduced, so that benzene is rapidly vaporized and fully mixed with the vapor of the silicon/silicon dioxide mixture, and then the mixed vapor is cooled and deposited on a water-cooled substrate; and a material output is pulverized to obtain silicon monoxide with carbon atoms uniformly embedded therein at an atomic level. It is tested, by a carbon-sulfur analyzer, that the carbon content is 0.9%. Then, carbon coating is performed on the pulverized material. 1 kg of the material is placed in a rotary furnace, the temperature is raised to 1000°C under the protection of argon, and then argon and mixed gas of propylene and methane with the same volume as argon are introduced for gas-phase coating, wherein the volume ratio of propylene to methane is 2:3; and the temperature is kept for 1 hour, an organic gas source is turned off, and after cooling, silicon monoxide with carbon atoms uniformly dispersed at an atomic level is obtained. It is tested, by a carbon-sulfur analyzer, that the total carbon content is 5%.

Silicon monoxide is subjected to ²⁹Si spectrum solid-state NMR testing to obtain a ²⁹Si NMR pattern, as shown by curve a in Fig. 1, from which it can be seen that a resonance peak of SiO₂ appears near -110 ppm, a resonance peak of Si appears near -80 ppm, and there is a resonance peak of Si-C between -10 ppm and -20 ppm, which indicates that carbon is dispersed into silicon monoxide at an atomic level.

Silicon monoxide with carbon atoms uniformly dispersed at an atomic level is subjected to XRD testing to obtain an XRD pattern. The results are shown in Fig. 2, from which it can be seen that there is no SiC crystallization peak in the curve, which indicates that Si-C is amorphous.

The silicon monoxide material is used as a negative electrode material. The negative electrode material, conductive carbon black (SP) serving as a conductive additive, and polyvinylidene fluoride (PVDF) serving as an adhesive are weighed according to the ratio of 95% : 2% : 3%, and slurry is prepared in a beater at room temperature. The prepared slurry is evenly applied to copper foil. After being dried in a blast drying oven at 50°C for 2 hours, the material is cut into 8×8 mm pole pieces, and then vacuum drying is performed in a vacuum drying oven at 100°C for 10 hours. The dried pole pieces are immediately transferred into a glove box for battery assembly.

Simulated battery assembly is performed in a glove box containing a high purity Ar atmosphere, with lithium metal serving as a counter electrode and a solution of 1 mol LiPF₆ in ethylene carbonate/dimethyl carbonate (EC/DMC V:V = 1:1) as an electrolyte. A constant current charge-discharge mode test is carried out by using a charge-discharge instrument. The discharge cut-off voltage is 0.005 V and the charge cut-off voltage is 1.5 V A first cycle of charge-discharge test is carried out at C/10 current density, and a second cycle of discharge test is carried out at C/10 current density. The test results of initial efficiency, 5C reversible capacity and cycle performance at 5C rate are listed in Table 1.

### Embodiment 2

8 kg of silicon powder and 9 kg of silicon dioxide powder are placed in a vacuum reaction furnace, vacuumizing is performed until the pressure is lower than 0.1 Torr, and then the temperature is raised to 1200°C, so that the materials are vaporized; at the same time, an ethanol solution is slowly introduced, so that ethanol is rapidly vaporized and fully mixed with the vapor of the silicon/silicon dioxide mixture, and then the mixed vapor is cooled and deposited on a water-cooled substrate; and a material output is pulverized to obtain silicon monoxide with carbon atoms uniformly embedded therein at an atomic level. It is tested, by a carbon-sulfur analyzer, that the carbon content is 1.2%. Then, carbon coating is performed on the pulverized material. 2 kg of the material is placed in a rotary furnace, the temperature is raised to 900°C under the protection of argon, and then mixed gas of argon and propylene is introduced according to the volume ratio of 1:1 for gas-phase coating; and the temperature is kept for 3 hours, an organic gas source is turned off, and after cooling, silicon monoxide with carbon atoms uniformly dispersed at an atomic level is obtained. It is tested, by a carbon-sulfur analyzer, that the total carbon content is 4.5%.

The preparation process of a negative plate, battery assembly and battery testing are the same as those in Embodiment 1. The test results of initial efficiency, 5C reversible capacity and cycle performance at 5C rate are listed in Table 1.

### Embodiment 3

5 kg of silicon powder and 6 kg of silicon dioxide powder are placed in a vacuum reaction furnace, vacuumizing is performed until the pressure is lower than 0.1 Torr, and then the temperature is raised to 1500°C, so that the materials are vaporized; at the same time, a diethyl ether solution is slowly introduced, so that diethyl ether is rapidly vaporized and fully mixed with the vapor of the silicon/silicon dioxide mixture, and then the mixed vapor is cooled and deposited on a water-cooled substrate; and a material output is pulverized to obtain silicon monoxide with carbon atoms uniformly embedded therein at an atomic level. It is tested, by a carbon-sulfur analyzer, that the carbon content is 1.7%. Then, carbon coating is performed on the pulverized material. The pulverized material is mixed with petroleum asphalt according to the mass ratio of 20:1, and placed in a high-temperature furnace for heat treatment at 900°C in a nitrogen atmosphere for 2 hours, and after cooling and grading, silicon monoxide with carbon atoms uniformly dispersed at an atomic level is obtained, of which the total carbon content is 5.3%.

The preparation process of a negative plate, battery assembly and battery testing are the same as those in Embodiment 1. The test results of initial efficiency, 5C reversible capacity and cycle performance at 5C rate are listed in Table 1.

### Embodiment 4

6 kg of silicon powder and 4 kg of silicon dioxide powder are placed in a vacuum reaction furnace, vacuumizing is performed until the pressure is lower than 0.1 Torr, and then the temperature is raised to 1300°C, so that the materials are vaporized; at the same time, an acetone solution is slowly introduced, so that acetone is rapidly vaporized and fully mixed with the vapor of the silicon/silicon dioxide mixture, and then the mixed vapor is cooled and deposited on a water-cooled substrate; and a material output is pulverized to obtain silicon monoxide with carbon atoms uniformly embedded therein at an atomic level. It is tested, by a carbon-sulfur analyzer, that the carbon content is 1.5%. Then, carbon coating is performed on the pulverized material. 2 kg of the material is placed in a rotary furnace, the temperature is raised to 1100°C under the protection of argon, and then argon and acetylene are introduced according to the volume ratio of 1:2 for gas-phase coating; and the temperature is kept for 1 hour, an organic gas source is turned off, and after cooling, silicon monoxide with carbon atoms uniformly dispersed at an atomic level is obtained, of which the total carbon content is 5%.

The preparation process of a negative plate, battery assembly and battery testing are the same as those in Embodiment 1. The test results of initial efficiency, 5C reversible capacity and cycle performance at 5C rate are listed in Table 1.

### Embodiment 5

6 kg of silicon powder and 4 kg of silicon dioxide powder are placed in a vacuum reaction furnace, vacuumizing is performed until the pressure is lower than 0.1 Torr, and then the temperature is raised to 1600°C, so that the materials are vaporized; at the same time, an acetonitrile solution is slowly introduced, so that acetonitrile is rapidly vaporized and fully mixed with the vapor of the silicon/silicon dioxide mixture, and then the mixed vapor is cooled and deposited on a water-cooled substrate; and a material output is pulverized to obtain silicon monoxide with carbon atoms uniformly embedded therein at an atomic level. It is tested, by a carbon-sulfur analyzer, that the carbon content is 1.7%. Then, carbon coating is performed on the pulverized material. 2 kg of the material is placed in a rotary furnace, the temperature is raised to 1100°C under the protection of argon, and then argon and methane are introduced according to the volume ratio of 1:1 for gas-phase coating; and the temperature is kept for 2 hours, an organic gas source is turned off, and after cooling, silicon monoxide with carbon atoms uniformly dispersed at an atomic level is obtained, of which the total carbon content is 5.4%.

The preparation process of a negative plate, battery assembly and battery testing are the same as those in Embodiment 1. The test results of initial efficiency, 5C reversible capacity and cycle performance at 5C rate are listed in Table 1.

### Embodiment 6

5 kg of silicon powder and 4 kg of silicon dioxide powder are placed in a vacuum reaction furnace, vacuumizing is performed until the pressure is lower than 0.1 Torr, and then the temperature is raised to 1500°C, so that the materials are vaporized; at the same time, a pyridine solution is slowly introduced, so that pyridine is rapidly vaporized and fully mixed with the vapor of the silicon/silicon dioxide mixture, and then the mixed vapor is cooled and deposited on a water-cooled substrate; and a material output is pulverized to obtain silicon monoxide with carbon atoms uniformly embedded therein at an atomic level. It is tested, by a carbon-sulfur analyzer, that the carbon content is 3%.

The silicon monoxide material is used as a negative electrode material. The negative electrode material, conductive carbon black (SP) serving as a conductive additive, and polyvinylidene fluoride (PVDF) serving as an adhesive are weighed according to the ratio of 95% : 2% : 3%, and slurry is prepared in a beater at room temperature. The prepared slurry is evenly applied to copper foil. After being dried in a blast drying oven at 50°C for 2 hours, the material is cut into 8×8 mm pole pieces, and then vacuum drying is performed in a vacuum drying oven at 100°C for 10 hours. The dried pole pieces are immediately transferred into a glove box for battery assembly.

Simulated battery assembly is performed in a glove box containing a high purity Ar atmosphere, with the above electrode serving as a negative electrode, a ternary positive electrode material NCM811 as a counter electrode, and garnet-type Li₇La₃Zr₂O₁₂ (LLZO) as a solid electrolyte. An all-solid-state button battery is assembled in the glove box, and is charged to evaluate its electrochemical performance. A constant current charge-discharge mode test is carried out by using a charge-discharge instrument. The discharge cut-off voltage is 0.005 V and the charge cut-off voltage is 1.5 V A first cycle of charge-discharge test is carried out at C/10 current density, and a second cycle of discharge test is carried out at C/10 current density. The test results of initial efficiency, 5C reversible capacity and cycle performance at 5C rate are listed in Table 1.

### Embodiment 7

3 kg of silicon powder and 4 kg of silicon dioxide powder are placed in a vacuum reaction furnace, vacuumizing is performed until the pressure is lower than 0.1 Torr, and then the temperature is raised to 1400°C, so that the materials are vaporized; at the same time, a tetrahydrofuran solution is slowly introduced, so that tetrahydrofuran is rapidly vaporized and fully mixed with the vapor of the silicon/silicon dioxide mixture, and then the mixed vapor is cooled and deposited on a water-cooled substrate; and a material output is pulverized to obtain silicon monoxide with carbon atoms uniformly embedded therein at an atomic level. It is tested, by a carbon-sulfur analyzer, that the carbon content is 3%. Then, carbon coating is performed on the pulverized material. 2 kg of the material is placed in a rotary furnace, the temperature is raised to 1100°C under the protection of argon, and then argon and mixed gas of propylene and methane with the same volume as argon are introduced for gas-phase coating, wherein the volume ratio of propylene to methane is 2:3; and the temperature is kept for 1.5 hours, an organic gas source is turned off, and after cooling, silicon monoxide with carbon atoms uniformly dispersed at an atomic level is obtained, of which the total carbon content is 6%.

The silicon monoxide material is used as a negative electrode material. The negative electrode material, conductive carbon black (SP) serving as a conductive additive, and polyvinylidene fluoride (PVDF) serving as an adhesive are weighed according to the ratio of 95% : 2% : 3%, and slurry is prepared in a beater at room temperature. The prepared slurry is evenly applied to copper foil. After being dried in a blast drying oven at 50°C for 2 hours, the material is cut into 8×8 mm pole pieces, and then vacuum drying is performed in a vacuum drying oven at 100°C for 10 hours. The dried pole pieces are immediately transferred into a glove box for battery assembly.

Simulated battery assembly is performed in a glove box containing a high purity Ar atmosphere, with the above electrode serving as a negative electrode, a ternary positive electrode material NCM811 as a counter electrode, and a polyolefin-based gel polymer electrolyte membrane as a semi-solid electrolyte. A semi-solid-state button battery is assembled in the glove box, and is charged to evaluate its electrochemical performance. A constant current charge-discharge mode test is carried out by using a charge-discharge instrument. The discharge cut-off voltage is 0.005 V and the charge cut-off voltage is 1.5 V A first cycle of charge-discharge test is carried out at C/10 current density, and a second cycle of discharge test is carried out at C/10 current density. The test results of initial efficiency, 5C reversible capacity and cycle performance at 5C rate are listed in Table 1.

### Embodiment 8

4 kg of silicon powder and 5 kg of silicon dioxide powder are placed in a vacuum reaction furnace, vacuumizing is performed until the pressure is lower than 0.1 Torr, and then the temperature is raised to 1200°C, so that the materials are vaporized; a tetrahydrofuran solution in which polyvinylidene fluoride is dissolved is slowly introduced into the vacuum reaction furnace while stirring, so that the solution is rapidly vaporized and fully mixed with the vapor of the silicon/silicon dioxide mixture, and then the mixed vapor is cooled and deposited on a water-cooled substrate; and a material output is pulverized to obtain silicon monoxide with carbon atoms uniformly embedded therein at an atomic level. It is tested, by a carbon-sulfur analyzer, that the carbon content is 2.6%.

The preparation process of a negative plate, battery assembly and battery testing are the same as those in Embodiment 1. The test results of initial efficiency, 5C reversible capacity and cycle performance at 5C rate are listed in Table 1.

### Embodiment 9

6 kg of silicon powder and 5 kg of silicon dioxide powder are placed in a vacuum reaction furnace, vacuumizing is performed until the pressure is lower than 0.1 Torr, and then the temperature is raised to 1700°C, so that the materials are vaporized; a dimethylformamide solution in which polyacrylonitrile is dissolved is slowly introduced into the vacuum reaction furnace while stirring, so that the solution is rapidly vaporized and fully mixed with the vapor of the silicon/silicon dioxide mixture, and then the mixed vapor is cooled and deposited on a water-cooled substrate; and a material output is pulverized to obtain silicon monoxide with carbon atoms uniformly embedded therein at an atomic level. It is tested, by a carbon-sulfur analyze, that the carbon content is 3%. Then, carbon coating is performed on the pulverized material. The pulverized material is mixed with petroleum asphalt according to the mass ratio of 20:1, and placed in a high-temperature furnace for heat treatment at 900°C in a nitrogen atmosphere for 2 hours, and after cooling and grading, silicon monoxide with carbon atoms uniformly dispersed at an atomic level is obtained, of which the total carbon content is 5%.

The preparation process of a negative plate, battery assembly and battery testing are the same as those in Embodiment 1. The test results of initial efficiency, 5C reversible capacity and cycle performance at 5C rate are listed in Table 1.

### Embodiment 10

6 kg of silicon powder and 5 kg of silicon dioxide powder are placed in a vacuum reaction furnace, vacuumizing is performed until the pressure is lower than 0.1 Torr, and then the temperature is raised to 1400°C, so that the materials are vaporized; a dimethyl sulfoxide solution in which polyurethane is dissolved is slowly introduced into the vacuum reaction furnace while stirring, so that the solution is rapidly vaporized and fully mixed with the vapor of the silicon/silicon dioxide mixture, and then the mixed vapor is cooled and deposited on a water-cooled substrate; and a material output is pulverized to obtain silicon monoxide with carbon atoms uniformly embedded therein at an atomic level. It is tested, by a carbon-sulfur analyzer, that the carbon content is 2.9%. Then, carbon coating is performed on the pulverized material. The pulverized material is mixed with petroleum asphalt according to the mass ratio of 20:1, and placed in a high-temperature furnace for heat treatment at 900°C in a nitrogen atmosphere for 2 hours, and after cooling and grading, silicon monoxide with carbon atoms uniformly dispersed at an atomic level is obtained, of which the total carbon content is 4.7%.

The preparation process of a negative plate, battery assembly and battery testing are the same as those in Embodiment 1. The test results of initial efficiency, 5C reversible capacity and cycle performance at 5C rate are listed in Table 1.

### Embodiment 11

6 kg of silicon powder and 6 kg of silicon dioxide powder are placed in a vacuum reaction furnace, vacuumizing is performed until the pressure is lower than 0.1 Torr, and then the temperature is raised to 1600°C, so that the materials are vaporized; a carbon black water-based dispersion is slowly introduced into the vacuum reaction furnace, so that the solution is rapidly vaporized and fully mixed with the vapor of the silicon/silicon dioxide mixture, and then the mixed vapor is cooled and deposited on a water-cooled substrate; and a material output is pulverized to obtain silicon monoxide with carbon atoms uniformly embedded therein at an atomic level. It is tested, by a carbon-sulfur analyzer, that the carbon content is 2%. Then, carbon coating is performed on the pulverized material. The pulverized material and phenolic resin are dissolved in an alcohol solvent according to the ratio of 20:1, and the mixture is stirred for 6 hours to form uniform slurry. Then, the slurry is directly dried and placed in a high-temperature furnace to be sintered for 2 hours at 900°C under the protection of nitrogen, and after cooling, grading and screening are performed to obtain silicon monoxide with carbon atoms uniformly dispersed at an atomic level, of which the total carbon content is 4.8%.

The preparation process of a negative plate, battery assembly and battery testing are the same as those in Embodiment 1. The test results of initial efficiency, 5C reversible capacity and cycle performance at 5C rate are listed in Table 1.

### Embodiment 12

3 kg of silicon powder and 3 kg of silicon dioxide powder are placed in a vacuum furnace, vacuumizing is performed until the pressure is lower than 0.1 Torr, and then the temperature is raised to 1500°C; an asphalt emulsion is slowly introduced into the vacuum reaction furnace, so that the solution is rapidly vaporized and fully mixed with the vapor of the silicon/silicon dioxide mixture, and then the mixed vapor is cooled and deposited on a water-cooled substrate; and a material output is pulverized to obtain silicon monoxide with carbon atoms uniformly embedded therein at an atomic level. It is tested, by a carbon-sulfur analyzer, that the carbon content is 4%. Then, carbon coating is performed on the pulverized material. The pulverized material and phenolic resin are dissolved in an alcohol solvent according to the ratio of 20:1, and the mixture is stirred for 6 hours to form uniform slurry. Then, the slurry is directly dried and placed in a high-temperature furnace to be sintered for 2 hours at 900°C under the protection of nitrogen, and after cooling, grading and screening are performed to obtain a carbon-coated silicon monoxide material with carbon atoms uniformly distributed at an atomic level, of which the total carbon content is 6.8%.

The preparation process of a negative plate, battery assembly and battery testing are the same as those in Embodiment 1. The test results of initial efficiency, 5C reversible capacity and cycle performance at 5C rate are listed in Table 1.

### Embodiment 13

6 kg of silicon powder and 6 kg of silicon dioxide powder are placed in a vacuum reaction furnace, vacuumizing is performed until the pressure is lower than 0.1 Torr, and then the temperature is raised to 1350°C, so that the materials are vaporized; at the same time, an asphalt emulsion and a tetrahydrofuran solution in which polyvinylidene fluoride is dissolved are introduced into the vacuum reaction furnace, so that the solution is rapidly vaporized and fully mixed with the vapor of the silicon/silicon dioxide mixture, and then the mixed vapor is cooled and deposited on a water-cooled substrate; and a material output is pulverized to obtain silicon monoxide with carbon atoms uniformly embedded therein at an atomic level. It is tested, by a carbon-sulfur analyzer, that the carbon content is 2.7%. Then, carbon coating is performed on the pulverized material. 2 kg of the material is placed in a rotary furnace, the temperature is raised to 1100°C under the protection of argon, and then argon and mixed gas of propylene and methane with the same volume as argon are introduced for gas-phase coating, wherein the volume ratio of propylene to methane is 1:3;
and the temperature is kept for 2 hours, an organic gas source is turned off, and after cooling, silicon monoxide with carbon atoms uniformly dispersed at an atomic level is obtained, of which the total carbon content is 5%.

The preparation process of a negative plate, battery assembly and battery testing are the same as those in Embodiment 1. The test results of initial efficiency, 5C reversible capacity and cycle performance at 5C rate are listed in Table 1.

### Embodiment 14

7 kg of silicon powder and 7 kg of silicon dioxide powder are placed in a vacuum reaction furnace, vacuumizing is performed until the pressure is lower than 0.1 Torr, and then the temperature is raised to 1450°C, so that the materials are vaporized; at the same time, an asphalt emulsion, acetone and a tetrahydrofuran solution in which polyvinylidene fluoride is dissolved are introduced into the vacuum reaction furnace, so that the solution is rapidly vaporized and fully mixed with the vapor of the silicon/silicon dioxide mixture, and then the mixed vapor is cooled and deposited on a water-cooled substrate; and a material output is pulverized to obtain silicon monoxide with carbon atoms uniformly embedded therein at an atomic level. It is tested, by a carbon-sulfur analyze, that the carbon content is 3%. Then, carbon coating is performed on the pulverized material. 2 kg of the material is placed in a rotary furnace, the temperature is raised to 1100°C under the protection of argon, and then argon and mixed gas of propylene and methane with the same volume as argon are introduced for gas-phase coating, wherein the volume ratio of propylene to methane is 1:3; and the temperature is kept for 2 hours, an organic gas source is turned off, and after cooling, silicon monoxide with carbon atoms uniformly dispersed at an atomic level is obtained, of which the total carbon content is 5%.

The preparation process of a negative plate, battery assembly and battery testing are the same as those in Embodiment 1. The test results of initial efficiency, 5C reversible capacity and cycle performance at 5C rate are listed in Table 1.

### Comparative example 1

1 kg of silicon powder and 1 kg of silicon dioxide powder are placed in a vacuum reaction furnace, vacuumizing is performed until the pressure is lower than 0.1 Torr, then the temperature is raised to 1400°C, so that the materials are vaporized, after that, the vapor is cooled and deposited on a water-cooled substrate, and a material output is pulverized. Then, carbon coating is performed on the pulverized material. 1 kg of the material is placed in a rotary furnace, the temperature is raised to 1000°C under the protection of argon, and then argon and mixed gas of propylene and methane with the same volume as argon are introduced for gas-phase coating, wherein the volume ratio of propylene to methane is 2:3; and the temperature is kept for 1 hour, an organic gas source is turned off, and after cooling, silicon monoxide with carbon atoms uniformly dispersed at an atomic level is obtained. It is tested, by a carbon-sulfur analyzer, that the carbon content is 4%.

Silicon monoxide is subjected to ²⁹Si spectrum solid-state NMR testing to obtain a ²⁹Si NMR pattern, as shown by Fig.1b, from which it can be seen that a resonance peak of SiO₂ appears near -110 ppm, a resonance peak of Si appears near -80 ppm, and there is no resonance peak of Si-C.

The preparation process of a negative plate, battery assembly and battery testing are the same as those in Embodiment 1. The test results of initial efficiency, 5C reversible capacity and cycle performance at 5C rate are listed in Table 1.

The test results of initial efficiency, 5C reversible capacity and cycle performance at 5C rate of the negative electrode materials in Embodiments 1-14 and Comparative example 1 are as follows.

**Table 1**

| | Initial efficiency | 5C reversible capacity (mAh/g) | | 100-cycle retention ratio% at 5C rate |
|---|---|---|---|---|
| | 500-cycle retention ratio% at 5C rate | | | |
| Embodiment 1 | 79.9 | 1728 | 85 | 70 |
| Embodiment 2 | 79.08 | 1725 | 82 | 68 |
| Embodiment 3 | 78.21 | 1675 | 84 | 69 |
| Embodiment 4 | 78.76 | 1682 | 82 | 68 |
| Embodiment 5 | 77.74 | 1714 | 83 | 66 |
| Embodiment 6 | 79.18 | 1704 | 81 | 65 |
| Embodiment 7 | 78.63 | 1732 | 85 | 67 |
| Embodiment 8 | 79.38 | 1764 | 80 | 64 |
| Embodiment 9 | 79.93 | 1705 | 82 | 66 |
| Embodiment 10 | 78.74 | 1755 | 80 | 67 |
| Embodiment 11 | 79.15 | 1749 | 84 | 65 |
| Embodiment 12 | 78.35 | 1724 | 85 | 66 |
| Embodiment 13 | 78.76 | 1748 | 81 | 69 |
| Embodiment 14 | 78.77 | 1746 | 83 | 67 |
| Comparative example 1 | 79.85 | 1728 | 49 | 34 |

As can be seen from the data in the table, under the same test conditions, in Embodiments 1-14, a carbon substance-containing solution is introduced into a deposition vapor for preparing silicon monoxide, so that it can be rapidly vaporized at high temperature, and then the mixed vapor is cooled and deposited to obtain silicon monoxide in which carbon atoms are uniformly embedded at an atomic level. The uniformly distributed carbon atoms can be bonded to silicon atoms to form amorphous Si-C bonds. Such silicon monoxide with carbon atoms uniformly embedded therein at an atomic level has small volume expansion in a lithium dis-embedding process, and high conductivity coefficient to the lithium ions, and thus the cycle performance and rate performance of the material are improved.

The above-mentioned specific embodiments further explain the purpose, technical solutions and beneficial effects of the present invention in detail. It should be understood that the above embodiments are only specific ones of the present invention and are not used to limit the scope of protection of the present invention. Any modification, equivalent substitution, improvement, etc. made within the spirit and principles of the present invention should be included in the scope of protection of the present invention.

## Claims

1. A uniformly modified silicon monoxide negative electrode material, comprising silicon monoxide and carbon atoms, wherein the carbon atoms are uniformly distributed in the silicon monoxide at an atomic level; each of the carbon atoms is bonded to a silicon atom to form an amorphous Si-C bond, and an X-ray diffraction (XRD) energy spectrum has no SiC crystallization peak; in solid-state nuclear magnetic resonance (NMR) detection of the uniformly modified silicon monoxide negative electrode material, a ²⁹Si NMR spectrum shows that there is a resonance peak of Si-C between -10 ppm and -20 ppm;
an average particle size D₅₀ of silicon monoxide negative electrode material particles is 1 nm-100 µm, and a specific surface area is 0.5 m²/g-40 m²/g; and a mass of the carbon atoms accounts for 0.1%-40% of a mass of the silicon monoxide.

2. The silicon monoxide negative electrode material according to claim 1, wherein a carbon coating layer is further provided outside the silicon monoxide negative electrode material, and a mass of the carbon coating layer accounts for 0-20% of the mass of the silicon monoxide.

3. The silicon monoxide negative electrode material according to claim 2, wherein the mass of the carbon atoms accounts for 0.5%-10% of the mass of the silicon monoxide, and the mass of the carbon coating layer accounts for 0-10% of the mass of the silicon monoxide.

4. A preparation method for the uniformly modified silicon monoxide negative electrode material according to any one of claims 1-3, comprising:
uniformly mixing silicon and silicon dioxide powder in a prescribed amount, and placing the mixture into a furnace body to obtain a vapor containing silicon and oxygen elements by heating under reduced pressure, wherein a heating temperature is 1000°C-1800°C;
introducing a carbon substance-containing solution into the furnace body to vaporize the carbon substance-containing solution, so as to obtain a mixed vapor; and cooling and depositing the mixed vapor on a water-cooled substrate, and pulverizing the deposited material to obtain a silicon monoxide material with carbon atoms uniformly dispersed at an atomic level, which is a silicon monoxide negative electrode material.

5. The preparation method according to claim 4, wherein the carbon substance-containing solution comprises one or more of an organic solution, an organic solution in which a solute is dissolved, and a water-based carbon-containing solution.

6. The preparation method according to claim 5, wherein
the carbon substance-containing solution comprises one or more of benzene, ethanol, diethyl ether, acetone, acetonitrile, pyridine, tetrahydrofuran, a tetrahydrofuran solution in which polyvinylidene fluoride is dissolved, a dimethylformamide solution in which polyacrylonitrile is dissolved, a dimethyl sulfoxide solution in which polyurethane is dissolved, a graphene water-based dispersion, a carbon black water-based dispersion or asphalt emulsion.

7. The preparation method according to claim 4, further comprising:
performing a carbon coating on the pulverized material, and obtaining the silicon monoxide negative electrode material after grading.

8. The preparation method according to claim 7, wherein the carbon coating comprises at least one of gas-phase coating, liquid-phase coating or solid-phase coating.

9. A negative plate comprising the silicon monoxide negative electrode material according to any one of claims 1-3.

10. A lithium battery comprising the negative plate according to claim 8.
